# EUROPÄISCHE PATENTSCHRIFT

(11) **EP 4 476 872 B1**
(45) Veröffentlichungstag und Bekanntmachung des Hinweises auf die Patenterteilung: **04.02.2026**
(21) Anmeldenummer: 23715765.6
(22) Anmeldetag: 20.03.2023
(51) Int. Cl.: H04L 9/32

(54) **RECHNERGESTÜTZTES INDUSTRIEGERÄT UND VERFAHREN ZUM BETREIBEN EINES RECHNERGESTÜTZTEN INDUSTRIEGERÄTS**
COMPUTER-BASED INDUSTRIAL APPARATUS AND METHOD FOR OPERATING A COMPUTER-ASSISTED INDUSTRIAL APPARATUS
APPAREIL INDUSTRIEL ASSISTÉ PAR ORDINATEUR ET PROCÉDÉ DE FONCTIONNEMENT D'UN APPAREIL INDUSTRIEL ASSISTÉ PAR ORDINATEUR

(30) Priorität: 24.03.2022 EP 22164153
(43) Veröffentlichungstag der Anmeldung: 18.12.2024
(73) Patentinhaber: Siemens Aktiengesellschaft, 80333 München (DE)
(72) Erfinder: DE SANTIS, Fabrizio, 80634 München (DE); FALK, Rainer, 85435 Erding (DE); FURCH, Andreas, 85354 Freising (DE); SAFIEH, Malek, 81539 München (DE); SCHNEIDER, Daniel, 80796 München (DE); WILDE, Florian, 80333 München (DE); ZESCHG, Thomas, 81543 München (DE)
(74) Vertreter: Siemens Patent Attorneys
(86) Internationale Anmeldenummer: PCT/EP2023/057001
(87) Internationale Veröffentlichungsnummer: WO 2023/180224

(56) Entgegenhaltungen:
- EP-A1- 3 432 185
- EP-B1- 3 695 337
- US-A1- 2008 259 555
- SIEMENS AG ET AL: "Security Modul mit Funktion zur Prüfung der Systemintegrität", PRIOR ART PUBLISHING GMBH, PRIOR ART PUBLISHING GMBH, MANFRED-VON-RICHTHOFEN-STR. 9, 12101 BERLIN GERMANY, vol. Prior Art Journal 2018 #07, 9 April 2018 (2018-04-09), pages 45 - 49, XP007017462

## Beschreibung

Die vorliegende Erfindung betrifft ein rechnergestütztes Industriegerät sowie ein System mit einem rechnergestützten Industriegerät und einem über ein Netzwerk mit dem Industriegerät gekoppelten Backend-System. Des Weiteren betrifft die vorliegende Erfindung ein Verfahren und ein Computerprogrammprodukt zum Betreiben eines rechnergestützten Industriegeräts.

Ein rechnergestütztes Industriegerät umfasst eine Attestierungs-Einheit zum Bereitstellen einer durch einen ersten kryptographischen Schutz geschützten Attestierung zur Angabe einer Integrität des Industriegeräts. Eine Attestierung oder Integritäts-Attestierung ist eine kryptographisch geschützte Datenstruktur, um eine Integritätsinformation beispielsweise einer Ausführungsumgebung des Industriegeräts gegenüber einem Kommunikationspartner zu bestätigen. Dieser kann diese Information berücksichtigen, zum Beispiel bei einem Provisioning/Credential-Management oder bei einer kritischen Anwendungsfunktionalität, wie beispielsweise Online-Banking.

Die Attestierung wird in der Praxis dabei häufig durch ein Hardware-Element gebildet, insbesondere durch eine Tamper-geschützte Rechenvorrichtung, zum Beispiel durch einen TPM-Chip (TPM; Trusted Platform Module) oder durch ein in einem Prozessor oder einem ASIC integriertes Sicherheitselement. Solche Hardware-basiert gebildeten Signaturen sind herkömmlicherweise nicht aktualisierbar. So wird üblicherweise eine RSA-Signatur, eine DSA-Signatur oder eine EC-DSA-Signatur verwendet. Die unterstützten Schlüssellängen sind dabei häufig relativ kurz, zum Beispiel 2048 Bit bei RSA.

Im Allgemeinen besteht in einem industriellen Anwendungskontext häufig die Anforderung, Geräte über einen langen Nutzungszeitraum sicher zu verwenden, zum Beispiel 10 bis 30 Jahre. In einem solch langen Zeitraum können auch die verwendeten kryptographischen Algorithmen an sich durch neue Angriffe, beispielsweise durch Quanten-Computer, geschwächt werden, oder Hardware-realisierte Implementierungen können Schwachstellen aufweisen.

Wenn, wie oben ausgeführt, eine Attestierung durch ein Hardware-Element gebildet wird, ist sie in der Praxis häufig nicht oder nur sehr aufwändig aktualisierbar. Andererseits hat gerade für die Attestierung einer Integritäts-Information ein Hardware-Element den Vorteil, dass dieses die Integritäts-Information zur Charakterisierung einer Laufzeitumgebung vertrauenswürdig vorhalten kann, zum Beispiel weil eine einmal erfasste Information nur aktualisiert werden kann, aber nicht beliebig überschrieben oder neu gesetzt werden kann. Insbesondere kann es möglich sein, dass die Signatureinrichtung des Hardware-Elements oder der durch sie verwendete Schlüssel nicht oder zumindest nicht durch einen Hersteller oder Betreiber des Industriegerätes aktualisiert werden kann. Daher kann nicht zuverlässig gewährleistet werden, dass die Integritäts-Attestierungsfunktion die für ein Industriegerät erforderliche Langzeittauglichkeit und Update-Fähigkeit bietet.

Aus dem Dokument EP 3 695 337 B1 ist bekannt, dass eine Attestierung von einem Bestätigungs-Gerät inhaltlich vorbearbeitet wird und durch das Bestätigungs-Gerät eine bearbeitete Attestierungs-Information bereitgestellt wird.

Vor diesem Hintergrund besteht eine Aufgabe der vorliegenden Erfindung darin, den Betrieb eines rechnergeschützten Industriegeräts zu verbessern, insbesondere hinsichtlich einer langzeittauglichen, update-fähigen Attestierungsfunktionalität.

Gemäß einem ersten Aspekt wird ein rechnergestütztes Industriegerät vorgeschlagen, welches eine Anzahl von Integritäts-Messeinheiten zum jeweiligen Bereitstellen eines Integritäts-Messwerts, eine Attestierungs-Einheit zum Bereitstellen einer durch einen ersten kryptographischen Schutz geschützten Integritäts-Attestierung zur Angabe einer Integrität des Industriegeräts oder eines Teils des Industriegeräts, wobei die Integritäts-Attestierung zumindest eine Anzahl von bereitgestellten Integritäts-Messwerten aufweist, und eine mit der Attestierungs-Einheit über einen physikalisch geschützten Übertragungsweg verbundene Bestätigungs-Einheit aufweist. Die Bestätigungs-Einheit umfasst eine Prüf-Einheit und eine Ausstell-Einheit. Die Prüf-Einheit ist zum Bereitstellen einer Prüfinformation mittels Prüfen zumindest eines Zustands der Bestätigungs-Einheit und/oder des Industriegeräts eingerichtet. Die Ausstell-Einheit ist zum Ausstellen einer durch einen zweiten kryptographischen Schutz geschützten Bestätigungs-Attestierung in Abhängigkeit der bereitgestellten Prüfinformation eingerichtet, wobei die Bestätigungs-Attestierung zumindest die Anzahl der Integritäts-Messwerte der Integritäts-Attestierung und eine von dem ersten kryptographischen Schutz (DS1) der Integritäts-Attestierung ableitbare Information umfasst.

Die Attestierungs-Einheit ist insbesondere eine Tamper-geschützte Rechenvorrichtung, beispielsweise ein Trusted Platform Module (TPM), und kann insbesondere auch als Secure-Element, Hardware-Element oder Hardware-Security-Komponente bezeichnet werden. Die Attestierungs-Einheit ist insbesondere nicht aktualisierbar oder nur mit hohem Aufwand aktualisierbar. Die Bestätigungs-Einheit ist über den physikalisch geschützten Übertragungsweg mit der Attestierungs-Einheit gekoppelt. Die Bestätigungs-Einheit ist insbesondere als ein in dem Industriegerät separates Hardware-Modul realisiert.

Das vorliegende rechnergestützte Industriegerät ist durch die Bestätigungs-Einheit in der Lage, eine kryptographisch geschützte Bestätigungs-Attestierung einer kryptographisch gestützten Integritäts-Attestierung, gebildet durch die Attestierungs-Einheit, zu bilden. Dabei umfasst die gebildete Bestätigungs-Attestierung zumindest die Integritätsmesswerte der Integritäts-Attestierung und eine von dem ersten kryptographischen Schutz der Integritäts-Attestierung ableitbare Information.

Hierdurch wird ermöglicht, eine langzeittaugliche Attestierung auf dem Industriegerät bereitzustellen, bei dem ein Hardware-Element als Attestierungs-Einheit zum aktuellen Zeitpunkt und auch zukünftig lediglich eine herkömmliche, klassische nicht PQ-fähige Attestierung bilden kann (PQ; Post-Quantum Cryptography).

Das Industriegerät kann auch als industrielles Gerät bezeichnet werden. Das Industriegerät ist insbesondere ein reales physikalisches Gerät, beispielsweise ein eingebettetes Gerät (Embedded Device) oder ein industrielles IoT-Gerät. In Ausführungsformen kann das Industriegerät auch ein virtualisiertes industrielles Gerät sein, beispielsweise eine virtuelle Maschine, eine App oder ein Container auf einer generischen Compute-Plattform.

Vorliegend wird demnach ermöglicht, herkömmliche Attestierungen, nämlich die Integritäts-Attestierungen, die häufig standardisiert sind und fest in Hardware implementiert sind und dadurch nicht aktualisierbar sind, durch einen zusätzlichen kryptographischen Schutz zu schützen, vorliegend durch den Einsatz der Bestätigungs-Einheit. Der Zusatzschutz durch die Bestätigungs-Einheit ist insbesondere aktualisierbar, so dass die Integritäts-Attestierungen verlässlich ausgewertet werden können, selbst wenn die dabei verwendeten kryptographischen Verfahren schon geschwächt sein sollten. Der Zusatzschutz ermöglicht dabei zu bewerten, ob der erfolgte Zusatzschutz tatsächlich zulässig ist, um eine bestimmte Integritäts-Attestierung zu schützen. Dabei wird eine missbräuchliche Verwendung des Zusatzschutzes verhindert.

Die kryptographisch geschützte Bestätigungs-Attestierung kann einem Kommunikationspartner des Industriegeräts, beispielsweise einem Backend-System, übermittelt werden. Der Kommunikationspartner erfüllt insbesondere einen Device-Management/Provisioning-Service zur Verwaltung und Provisionierung des Industriegeräts. Der Kommunikationspartner kann die kryptographische Gültigkeit und die inhaltliche Zulässigkeit sowohl der Integritäts-Attestierung wie auch zusätzlich der kryptographisch geschützten Bestätigungs-Attestierung überprüfen, bevor ein Provisioning, zum Beispiel ein Bereitstellen eines Credentials, eines Schlüssels, eines Zertifikats oder eines Security-Tokens des Industriegerätes freigegeben wird oder erfolgt, oder bevor eine kritische Device-Management-Operation erfolgt, zum Beispiel ein Firmware-Update, ein Aktualisieren von Konfigurationsdaten und/oder ein Bereitstellen von sensiblen Produktionsdaten.

In Ausführungsformen entspricht die von dem ersten kryptographischen Schutz der Integritäts-Attestierung ableitbare Information dem ersten kryptographischen Schutz. Für die Ausführungsformen, bei denen der erste kryptographische Schutz der ersten digitalen Signatur entspricht, ist die Information von der ersten digitalen Signatur ableitbar bzw. entspricht dieser.

Der jeweilige Integritäts-Messwert bezieht sich insbesondere auf eine Komponente des Industriegeräts, zum Beispiel auf die Firmware, auf die Software, auf die Konfiguration oder auf eine der Hardwarekomponenten des Industriegeräts. In Ausführungsformen umfasst das Industriegerät mehrere Integritäts-Messeinheiten, welche jeweils einen Integritäts-Messwert ermitteln und der Attestierungs-Einheit bereitstellen. Bei den Integritäts-Messungen kann es sich insbesondere auch um kryptographische Hash-Werte von geladenen Firmware-Komponenten oder Software-Komponenten sowie von Konfigurationsdaten handeln. Weiterhin können Ergebnisse von integrierten Selbsttest-Funktionen (Built-In Self-Tests) als Integritäts-Messungen erfasst werden. Weiterhin können als Integritäts-Messungen auch Hardware-Fingerprints von Hardware-Komponenten des Industriegeräts erfasst werden.

Kryptographisches Schützen umfasst vorliegend insbesondere Integritätsschutz, Authentizität und/oder Vertraulichkeit.

Gemäß einer Ausführungsform ist der erste kryptographische Schutz als eine erste digitale Signatur ausgebildet.

Gemäß einer weiteren Ausführungsform ist der zweite kryptographische Schutz als eine zweite digitale Signatur ausgebildet.

Gemäß einer weiteren Ausführungsform ist die Attestierungs-Einheit dazu eingerichtet, die kryptographisch geschützte Integritäts-Attestierung derart bereitzustellen, dass diese die Anzahl von Integritäts-Messwerten und die erste digitale Signatur umfasst.

Die Integritäts-Attestierung kann auch weitere Informationen umfassen, zum Beispiel eine Identifizierungs-Information des Industriegerätes, eine Identifizierungs-Information der Attestierungs-Einheit und/oder eine Aktualitäts-Information, wie zum Beispiel einen Zeitstempel oder einen Zählerwert.

Gemäß einer weiteren Ausführungsform ist die Bestätigungs-Einheit dazu eingerichtet, die kryptographisch geschützte Bestätigungs-Attestierung derart bereitzustellen, dass diese zumindest die Anzahl der Integritäts-Messwerte und die erste digitale Signatur der Integritäts-Attestierung sowie die zweite digitale Signatur der Bestätigungs-Attestierung umfasst.

Gemäß einer weiteren Ausführungsform ist die Bestätigungs-Einheit dazu eingerichtet, die kryptographisch geschützte Bestätigungs-Attestierung derart bereitzustellen, dass diese die Anzahl der Integritäts-Messwerte und die erste digitale Signatur der Integritäts-Attestierung, die zweite digitale Signatur der Bestätigungs-Attestierung und die Prüfinformation und/oder eine von der Prüfinformation ableitbare Information umfasst, welche indikativ für die Bildung der Bestätigungs-Attestierung in der Bestätigungs-Einheit ist.

Die Prüfinformation selbst wie auch die von der Prüfinformation ableitbare Information haben insbesondere die Eignung anzugeben, dass die Bestätigungs-Attestierung in der Bestätigungs-Einheit gebildet ist. Die Prüfinformation bzw. die von der Prüfinformation ableitbare Information ist insbesondere Teil einer Bestätigungs-Attestierung-Bildungsinformation oder bildet diese aus. Die Bestätigungs-Attestierung-Bildungsinformation charakterisiert insbesondere, auf welche Art die Bestätigungs-Attestierung gebildet wurde. Die Bestätigungs-Attestierung-Bildungsinformation ist in Ausführungsformen Teil der Bestätigungs-Attestierung. Indirekt lässt sie damit vorzugsweise auch einen Rückschluss darauf zu, auf welche Art die Integritäts-Bestätigung gebildet wurde. Diese Zusatzinformation ermöglicht einem Empfänger der Bestätigungs-Attestierung zu entscheiden, ob diese Art der Bildung gemäß einer vorgebbaren Richtlinie oder Policy als zulässig erachtet wird. Abhängig davon wird die durch die Bestätigungs-Attestierung bestätigte Integritäts-Attestierung von dem Empfänger akzeptiert oder nicht.

Die Bestätigungs-Attestierung-Bildungsinformation kann insbesondere folgende Teilinformationen zur Charakterisierung der Art der Bildung der Bestätigungs-Attestierung umfassen:
- Geräte-Identifier des Industriegeräts, beispielsweise Seriennummer und/oder Software-Version;
- Attestierung der eigenen Systemintegrität der Bestätigungs-Einheit mittels einer PQ-Signatur (PQ; Post-Quantum Cryptography), zum Beispiel mittels eines PQ-TPM, oder durch Übertragen über einen PQ-sicheren Übertragungsweg;
- aktuell vorliegender Betriebsmodus des Industriegeräts, auf dem die Bestätigungs-Attestierung gebildet wurde, zum Beispiel Service, Operation, Start-up, Firmware-Update, Failure;
- Art der Ausführungsumgebung, zum Beispiel eine SGX-Enklave, ein Trusted Execution Environment (TEE), ein Crypto-Controller, ein Hardware-Security-Module (HSM), in der die Bestätigungs-Attestierung gebildet wurde;
- aktuelle Umgebungsinformationen der Ausführungsumgebung, in der die Bestätigungs-Attestierung gebildet wurde, zum Beispiel Zeitinformation oder Positionsinformation, die zum Beispiel durch ein Lokalisierungssystem oder mittels eines satellitengestützten Navigationssystems, wie GPS, GALILEO, BEIDOU, GLONASS, ermittelt wurde;
- Prüfung der bereitgestellten Integritäts-Attestierung, beispielsweise Prüfung der digitalen Signatur der Integritäts-Attestierung, inhaltliche Bewertung oder Plausibilisierung der durch die Integritäts-Attestierung attestierten Integritäts-Information, und/oder Prüfung der Schnittstelle, über die die Integritäts-Attestierung empfangen wurde.

Gemäß einer weiteren Ausführungsform umfasst die Bestätigungs-Attestierung die Integritäts-Attestierung in verschlüsselter Form. Dazu wird beim Bilden der Bestätigungs-Attestierung durch die Bestätigungs-Einheit die vorliegende Integritäts-Attestierung kryptographisch verschlüsselt.

Gemäß einer weiteren Ausführungsform umfasst die Attestierungs-Einheit eine gegen Zugriff von extern gesicherte erste Speicher-Einheit zum Speichern eines dem ersten kryptographischen Schutz zugeordneten ersten kryptographischen Credentials.

Gemäß einer weiteren Ausführungsform umfasst die Bestätigungs-Einheit eine aktualisierbare zweite Speicher-Einheit zum Speichern eines dem zweiten kryptographischen Schutz zugeordneten zweiten kryptographischen Credentials. In Ausführungsformen ist auch die Implementierung, zum Beispiel die Firmware und/oder die Software, zum Bilden des zweiten kryptographischen Schutzes aktualisierbar.

Gemäß einer weiteren Ausführungsform ist der erste kryptographische Schutz als eine erste digitale Signatur ausgebildet und das erste kryptographische Credential ist als ein der ersten digitalen Signatur zugeordneter privater Schlüssel ausgebildet.

Gemäß einer weiteren Ausführungsform ist der zweite kryptographische Schutz als eine zweite digitale Signatur ausgebildet und das zweite kryptographische Credential ist als ein der zweiten digitalen Signatur zugeordneter privater Schlüssel ausgebildet.

Gemäß einer weiteren Ausführungsform ist die Prüf-Einheit mit einer Anzahl von in dem Industriegerät oder an dem Industriegerät verbauten physikalischen Sensoren zum Bereitstellen von für den Zustand der Bestätigungs-Einheit und/oder des Industriegeräts indikativen Sensorsignalen verbunden.

Die physikalischen Sensoren sind insbesondere zum Ermitteln der Temperatur, des Luftdruckes, der Luftfeuchtigkeit, von Erschütterungen, der Beschleunigung und/oder zum Erkennen physikalischer Manipulationen eingerichtet.

Gemäß einer weiteren Ausführungsform ist die Prüf-Einheit zur Bereitstellung der Prüfinformation dazu eingerichtet, einen Firmware-Stand der Bestätigungs-Einheit zu prüfen, ein Ausgangssignal eines Gehäuseschutzschalters des Industriegeräts zu prüfen, ein Ausgangssignal eines Tamperschutzsensors des Industriegeräts zu prüfen, ein Ausgangssignal eines Spannungssensors zur Überwachung einer Spannungsversorgung des Industriegeräts zu prüfen und/oder zu prüfen, ob eine aktuelle von einem in dem oder an dem Industriegerät verbauten Temperatursensor gelieferte Temperatur innerhalb eines vorbestimmten Temperaturbereichs liegt.

Gemäß einer weiteren Ausführungsform umfasst die Bestätigungs-Einheit eine Integritäts-Prüfeinheit, welche insbesondere der Ausstell-Einheit vorgeschaltet ist. Die Integritäts-Prüfeinheit ist dazu eingerichtet, die Gültigkeit der von der Attestierungs-Einheit bereitgestellten Integritäts-Attestierung lokal zu prüfen. Hierbei prüft die Integritäts-Prüfeinheit insbesondere die digitale Signatur der Integritäts-Attestierung. Zusätzlich oder alternativ kann die Integritäts-Prüfeinheit auch die Integritäts-Messwerte, welche Teil der Integritäts-Attestierung sind, inhaltlich auswerten und insbesondere hinsichtlich Aktualität und/oder Plausibilität überprüfen.

Gemäß einer weiteren Ausführungsform ist die Attestierungs-Einheit als eine Tamper-geschützte Rechenvorrichtung ausgebildet. Die Tamper-geschützte Rechenvorrichtung ist insbesondere ein Trusted Platform Module (TPM).

Gemäß einer weiteren Ausführungsform weist das Industriegerät ein einziges Gehäuse auf, in welchem die Attestierungs-Einheit, die Bestätigungs-Einheit und der die Attestierungs-Einheit und die Bestätigungs-Einheit verbindende physikalisch geschützte Übertragungsweg angeordnet sind.

Gemäß einer weiteren Ausführungsform weist das Industriegerät ein Gehäuse auf, in dem die Attestierungs-Einheit angeordnet ist, wobei die Bestätigungs-Einheit als ein Ansteckmodul zum Anstecken an einen Bus des Industriegeräts ausgebildet ist.

Gemäß einer weiteren Ausführungsform weist das Industriegerät ein Einschubgehäuse auf, wobei die Bestätigungs-Einheit oder die Bestätigungs-Einheit und die Attestierungs-Einheit als ein jeweiliges Einschubmodul zum Einstecken in das Einschubgehäuse ausgebildet sind.

Die jeweilige Einheit, zum Beispiel die Attestierungs-Einheit, die Prüf-Einheit oder die Ausstell-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als integrierter Schaltkreis ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem zweiten Aspekt wird ein System vorgeschlagen, welches ein rechnergestützten Industriegerät gemäß dem ersten Aspekt oder gemäß einer der Ausführungsformen des ersten Aspekts und ein über ein Netzwerk mit dem Industriegerät gekoppeltes Backend-System umfasst. Das Backend-System ist dazu eingerichtet, die von dem Industriegerät ausgestellte Bestätigungs-Attestierung zur Ermittlung der Integrität des Industriegeräts zu prüfen.

Die von dem Industriegerät ausgestellte Bestätigungs-Attestierung wird zur Prüfung dem System über das Netzwerk bereitgestellt. Abhängig von der Prüfung der Bestätigungs-Attestierung und der dadurch bestätigten Integritäts-Attestierung kann von dem System eine sicherheitsrelevante Aktion freigegeben oder angestoßen werden. Dies kann insbesondere das Bereitstellen oder Bestätigen eines kryptographischen Schlüssels an das Industriegerät oder an die Bestätigungs-Einheit sein. Hierbei kann die Bestätigungs-Attestierung insbesondere durch eine PQ-Signatur oder durch Übertragen über einen PQ-sicheren Übertragungsweg, zum Beispiel unter Nutzung eines Schlüsselkapselungsverfahrens (KEM-Verfahren, KEM: key encapsulation mechanism) wie z.B. KEMTLS, geschützt werden.

Das Backend-System ist beispielsweise ein Cloud-System, ein Edge-Cloud-System oder ein Produktionsüberwachungssystem. Dabei kann das Backend-System auch ein System sein, das sich lokal in der Fabrik mit dem Industriegerät befindet.

Gemäß einem dritten Aspekt wird ein computerimplementiertes Verfahren zum Betreiben eines rechnergestützten Industriegeräts vorgeschlagen. Das Verfahren umfasst die Schritte:
Bereitstellen einer Anzahl von Integritäts-Messwerten mittels zumindest einer Integritäts-Messeinheit des Industriegeräts,
Bereitstellen einer durch einen ersten kryptographischen Schutz geschützten Integritäts-Attestierung zur Angabe einer Integrität des Industriegeräts oder eines Teils des Industriegeräts, wobei die Integritäts-Attestierung zumindest eine Anzahl von bereitgestellten Integritäts-Messwerten aufweist, und
Bereitstellen einer Prüfinformation mittels Prüfen zumindest eines Zustands der Bestätigungs-Einheit und/oder des Industriegeräts und Ausstellen einer durch einen zweiten kryptographischen Schutz geschützten Bestätigungs-Attestierung in Abhängigkeit der bereitgestellten Prüfinformation, wobei die Bestätigungs-Attestierung zumindest die Anzahl der Integritäts-Messwerte der Integritäts-Attestierung und eine von dem ersten kryptographischen Schutz der Integritäts-Attestierung ableitbare Information umfasst.

Die für das vorgeschlagene Industriegerät beschriebenen Ausführungsformen und Merkmale gelten für das vorgeschlagene Verfahren entsprechend.

Gemäß einem vierten Aspekt wird ein Computerprogrammprodukt vorgeschlagen, welches auf einer programmgesteuerten Einrichtung die Durchführung des wie oben erläuterten Verfahrens gemäß dem dritten Aspekt oder einer der Ausführungsformen des dritten Aspekts veranlasst.

Ein Computerprogrammprodukt, wie z.B**.** ein Computerprogramm-Mittel, kann beispielsweise als Speichermedium, wie z.B**.** Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild eines ersten Ausführungsbeispiels eines rechnergestützten Industriegeräts;
- Fig. 2: zeigt ein schematisches Diagramm eines Ausführungsbeispiels einer Integritäts-Attestierung;
- Fig. 3: zeigt ein schematisches Diagramm eines Ausführungsbeispiels einer Bestätigungs-Attestierung;
- Fig. 4: zeigt ein schematisches Blockschaltbild eines zweiten Ausführungsbeispiels eines rechnergestützten Industriegeräts;
- Fig. 5: zeigt ein schematisches Blockschaltbild eines Ausführungsbeispiels eines Systems mit einem rechnergestützten Industriegerät; und
- Fig. 6: zeigt ein schematisches Ablaufdiagramm eines Ausführungsbeispiels eines Verfahrens zum Betreiben eines rechnergestützten Industriegeräts.

In den Figuren sind gleiche oder funktionsgleiche Elemente mit denselben Bezugszeichen versehen worden, sofern nichts anderes angegeben ist.

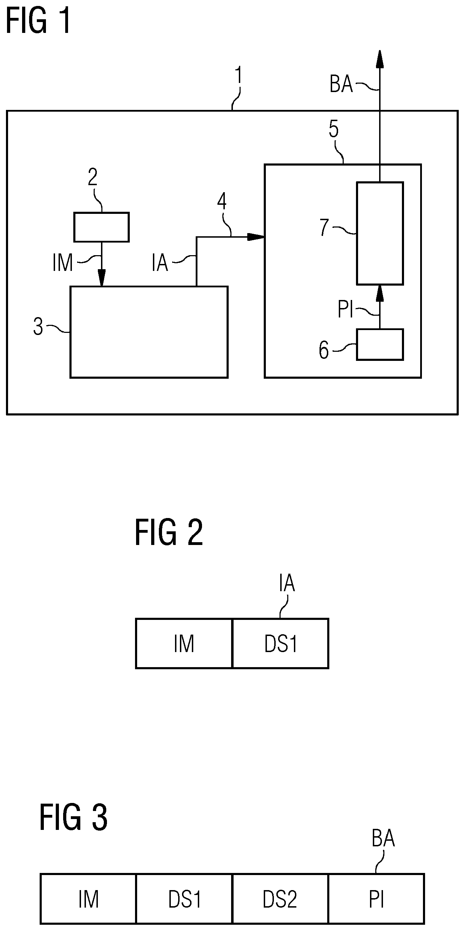

Fig. 1 zeigt ein schematisches Blockschaltbild eines ersten Ausführungsbeispiels eines rechnergestützten Industriegeräts 1. Das Industriegerät 1 ist rechnergestützt und umfasst demnach Rechenkapazitäten und Speicherkapazitäten, insbesondere einen Rechner oder Mikroprozessor und zumindest einen Speicher, wie beispielsweise einen RAM-Speicher und/oder einen ROM-Speicher.

Das Ausführungsbeispiel nach Fig. 1 wird unter Bezugnahme auf die Fig. 2 und 3 erläutert. Das Industriegerät 1 der Fig. 1 umfasst eine Integritäts-Messeinheit 2, eine Attestierungs-Einheit 3 und eine über einen physikalisch geschützten Übertragungsweg 4 mit der Attestierungs-Einheit 3 verbundene Bestätigungs-Einheit 5. Die Bestätigungs-Einheit 5 umfasst eine Prüf-Einheit 6 sowie eine Ausstell-Einheit 7. Die Attestierungs-Einheit 3 ist insbesondere als eine Tamper-geschützte Rechenvorrichtung ausgebildet. Die Tamper-geschützte Rechenvorrichtung ist beispielsweise ein Trusted Platform Module (TPM). Die Integritäts-Messeinheit 2 ist beispielsweise eine Root-of-Trust-for-Measurement-Einheit (RTM).

Die Integritäts-Messeinheit 2 ist dazu eingerichtet, einen Integritäts-Messwert IM bereitzustellen. Der Integritäts-Messwert IM bezieht sich insbesondere auf eine Komponente des Industriegeräts 1, zum Beispiel auf die Firmware, auf die Software, auf die Konfiguration oder auf eine Hardwarekomponente des Industriegeräts 1.

Die Attestierungs-Einheit 3 empfängt den Integritäts-Messwert IM und stellt ausgangsseitig eine durch einen ersten kryptographischen Schutz DS1 (vgl. Fig. 2) geschützte Integritäts-Attestierung IA zur Angabe einer Integrität des Industriegeräts 1 oder eines Teils des Industriegeräts 1 bereit. Der erste kryptographische Schutz DS1 ist insbesondere als eine erste digitale Signatur ausgebildet. Die Integritäts-Attestierung IA umfasst beispielsweise - wie in Fig. 2 dargestellt - den bereitgestellten Integritäts-Messwert IM und die erste digitale Signatur DS1. Es ist auch möglich, dass die Attestierungs-Einheit 3 in der von ihr gebildeten Integritäts-Attestierung IA einen Integritätsmesswert bestätigt, den sie abhängig von dem von dem von der Integritäts-Messeinheit 2 empfangenen Integritäts-Messwert IM bildet. Die Attestierungs-Einheit 3 kann beispielsweise einen kryptographischen Hash-Wert abhängig von dem von der Integritäts-Messeinheit 2 empfangenen Integritäts-Messwert IM ermitteln und diesen als Integritätsmesswert in der Integritäts-Attestierung IA bestätigen.

Die Prüf-Einheit 6 ist dazu eingerichtet, eine PrüfInformation PI mittels Prüfen zumindest eines Zustands der Bestätigungs-Einheit 5 und/oder des Industriegeräts 1 bereitzustellen.

Die Ausstell-Einheit 7 ist dazu eingerichtet, eine durch einen zweiten kryptographischen Schutz DS2 geschützte Bestätigungs-Attestierung BA in Abhängigkeit der bereitgestellten Prüfinformation PI auszustellen und ausgangsseitig bereitzustellen. In dem Ausführungsbeispiel nach Fig. 3 umfasst die Bestätigungs-Attestierung BA den bereitgestellten Integritäts-Messwert IM und die erste digitale Signatur DS1 der Integritäts-Attestierung IA sowie die zweite digitale Signatur DS2 der Bestätigungs-Attestierung BA und die Prüfinformation PI oder eine von der Prüfinformation PI ableitbare Information, welche indikativ für die Bildung der Bestätigungs-Attestierung BA in der Bestätigungs-Einheit 5 ist. In einer alternativen Darstellung der Fig. 3 könnte die zweite digitale Signatur DS2 auch ganz rechts dargestellt werden, da sie vorzugsweise auch die Prüfinformation PI schützt.

Die zweite digitale Signatur DS2 kann vorzugsweise die Integrität des Integritäts-Messwerts IM, der ersten digitalen Signatur DS1 und der Prüfinformation PI schützen. Hervorzuheben ist, dass sowohl die Prüfinformation PI selbst als auch die von der Prüfinformation PI ableitbare Information die Eignung aufweisen, anzugeben, dass die Bestätigungs-Attestierung BA in der Bestätigungs-Einheit 5 gebildet ist beziehungsweise dass die Bestätigungs-Attestierung BA in einer nichtmanipulierten Bestätigungs-Einheit 5 gebildet ist. Weiterhin kann die Prüfinformation PI selbst als auch die von der Prüfinformation PI ableitbare Information die Eignung aufweisen. anzugeben, dass die Erfassung des Integritäts-Messwert IM durch die Integritäts-Messeinheit 2, die Übertragung des Integritäts-Messwerts IM von der Integritäts-Messeinheit 2 an die Attestierungs-Einheit 3, die Bildung der Integritätsattestierung IA durch die Attestierungs-Einheit 3 und/oder die Übertragung der Integritätsattestierung IA von der Attestierungs-Einheit 3 an die Bestätigungs-Einheit 5 über den physikalisch geschützten Übertragungsweg 4 nicht-manipuliert erfolgt ist.

Das Industriegerät 1 umfasst beispielsweise ein einziges Gehäuse, in welchem die Attestierungs-Einheit 3, die Bestätigungs-Einheit 5 und der die Attestierungs-Einheit 3 und die Bestätigungs-Einheit 5 verbindende physikalisch geschützte Übertragungsweg 4 angeordnet sind.

In alternativen Ausführungsformen umfasst das Industriegerät 1 ein Gehäuse, in welchem die Attestierungs-Einheit 3 angeordnet ist, wobei die Bestätigungs-Einheit 5 als ein Ansteckmodul zum Anstecken an einen Bus (nicht gezeigt) des Industriegeräts 1 ausgebildet ist.

In alternativen Ausführungsformen umfasst das Industriegerät 1 ein Einschubgehäuse, wobei die Betätigungs-Einheit 5 oder die Betätigungs-Einheit 5 und die Attestierungs-Einheit 3 als ein jeweiliges Einschubmodul zum Einstecken in das Einschubgehäuse ausgebildet sind.

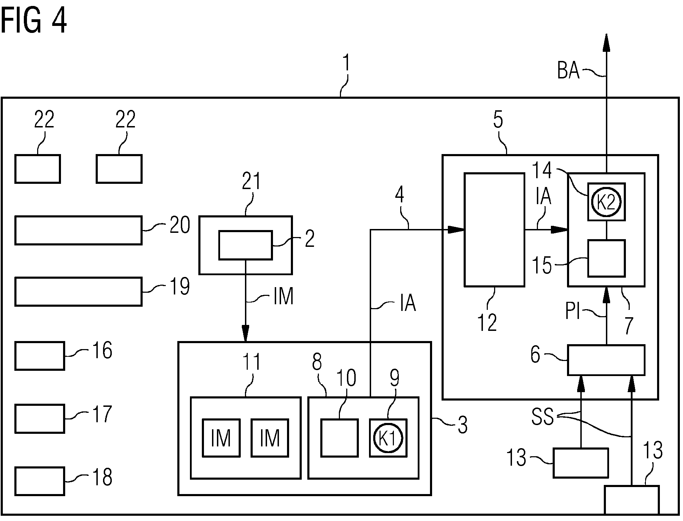

Fig. 4 zeigt ein schematisches Blockschaltbild eines zweiten Ausführungsbeispiels eines rechnergestützten Industriegeräts 1. Das zweite Ausführungsbeispiel nach Fig. 4 umfasst alle Merkmale des ersten Ausführungsbeispiels nach den Fig. 1 bis 3 und darüber hinaus eine in der Attestierungs-Einheit 3 angeordnete Integritäts-Einheit 8 mit einer Speicher-Einheit 9 und einer Signatur-Einheit 10 sowie ein Register 11. Die Bestätigungs-Einheit 5 der Fig. 4 umfasst die Prüf-Einheit 6, die Ausstell-Einheit 7 mit einer Speicher-Einheit 14 und einer Signier-Einheit 15 sowie eine Integritäts-Prüfeinheit 12. Die Prüf-Einheit 6 der Fig. 4 ist mit einer Anzahl von Sensoren 13 gekoppelt. Ohne Einschränkung der Allgemeinheit zeigt die Fig. 4 zwei Sensoren 13.

Des Weiteren hat das Industriegerät 1 der Fig. 4 eine CPU 16, einen RAM-Speicher 17, einen SSD-Speicher 18, einen Bootloader 19, ein Betriebssystem 20, eine Ausführungsumgebung 21 und eine Anzahl von Applikationen 22. In dem Ausführungsbeispiel der Fig. 4 ist die Integritäts-Messeinheit 2 in der Ausführungsumgebung 21 angeordnet. Die Ausführungsumgebung 21 ist beispielsweise eine Echtzeitumgebung. Des Weiteren können weitere Integritäts-Messeinheiten 2 beispielsweise im Bootloader 19 und im Betriebssystem 20 angeordnet sein. Die von den Integritäts-Messeinheiten 2 bereitgestellten Integritäts-Messwerte IM sind in dem Register 11 der Attestierungs-Einheit 3 gespeichert.

Die Speicher-Einheit 9 der Attestierungs-Einheit 3 ist insbesondere eine gegen Zugriff von extern gesicherte Speicher-Einheit und speichert ein dem ersten kryptographischen Schutz DS1 zugeordnetes erstes kryptographisches Credential K1. Das kryptographische Credential K1 ist beispielsweise ein privater Schlüssel der Attestierungs-Einheit 3.

Im Gegensatz dazu ist die Speicher-Einheit 14 der Bestätigungs-Einheit 5 als aktualisierbare Speicher-Einheit ausgestaltet und speichert ein dem zweiten kryptographischen Schutz DS2 zugeordnetes zweites kryptographisches Credential K2. Das zweite kryptographische Credential K2 ist beispielsweise ein privater Schlüssel der Bestätigungs-Einheit 5.

Die oben bereits erwähnten Sensoren 13 sind in dem Gehäuse des Industriegerätes 1 oder an dem Gehäuse des Industriegerätes 1 verbaut und haben die Eignung, Sensorsignale SS bereitzustellen, welche indikativ für den Zustand der Bestätigungs-Einheit 5 und/oder für den Zustand des Industriegeräts 1 sind.

Hierbei ist die Prüf-Einheit 6 zur Bereitstellung der Prüfinformation PI insbesondere dazu eingerichtet, einen Firmware-stand der Bestätigungs-Einheit 5 zu prüfen, ein Ausgangssignal eines Gehäuseschutzschalters des Industriegeräts 1 zu prüfen, ein Ausgangssignal eines Tamperschutzsensors des Industriegeräts 1 zu prüfen, ein Ausgangssignal eines Spannungssensors zur Überwachung einer Spannungsversorgung des Industriegeräts 1 zu prüfen und/oder zu prüfen, ob eine aktuelle von einem in dem oder an dem Industriegerät 1 verbauten Temperatursensor gelieferte Temperatur innerhalb eines vorbestimmten Temperaturbereichs liegt.

Wie oben erwähnt, umfasst die Bestätigungs-Einheit 5 eine Integritäts-Prüfeinheit 12, welche insbesondere der Ausstell-Einheit 7 vorgeschaltet ist. Die Integritäts-Prüfeinheit 12 ist dazu eingerichtet, die Gültigkeit der von der Attestierungs-Einheit 3 bereitgestellten Integritäts-Attestierung IA lokal zu prüfen. Hierbei prüft die Integritäts-Prüfeinheit 12 insbesondere die digitale Signatur DS1 der Integritäts-Attestierung IS. Zusätzlich oder alternativ kann die Integritäts-Prüfeinheit 12 auch die Integritäts-Messwerte IM, welche Teil der Integritäts-Attestierung IS sind, inhaltlich auswerten und insbesondere hinsichtlich Aktualität und/oder Plausibilität überprüfen.

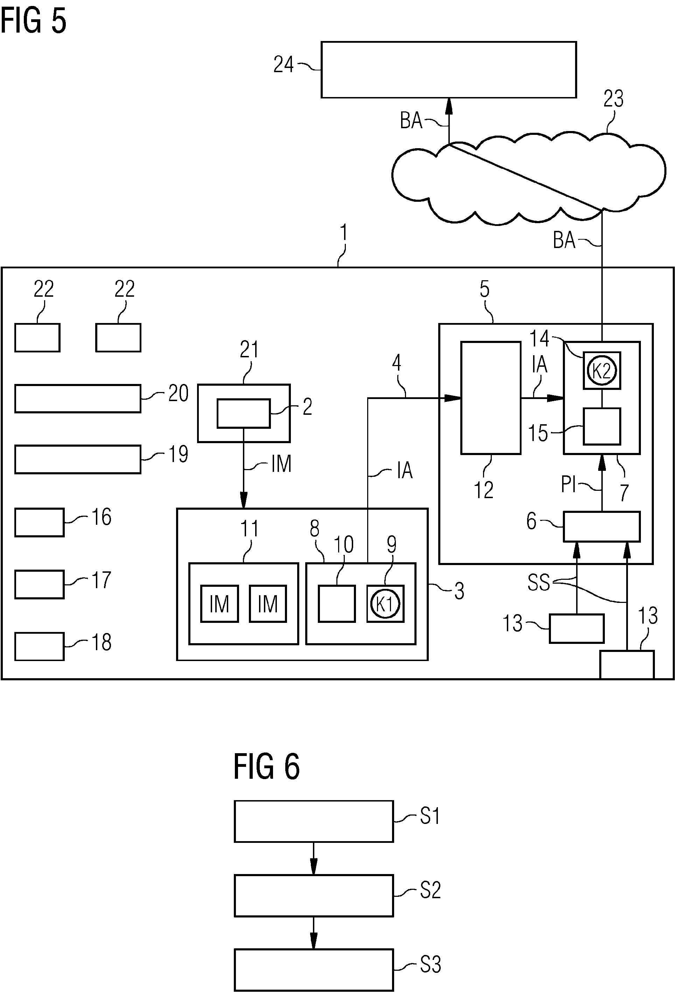

In Fig. 5 ist ein schematisches Blockschaltbild eines Ausführungsbeispiels eines Systems mit einem rechnergestützten Industriegerät 1, einem Netzwerk 23 und einem Backend-System 24 dargestellt. Das Industriegerät 1 nach Fig. 5 basiert auf der Ausführungsform des Industriegeräts 1 nach Fig. 4. Das Netzwerk 23 koppelt das Industriegerät 1 und das Backend-System 24. Das Netzwerk 23 kann IP, WLAN und/oder andere Systeme und auch Unternetzwerke umfassen. Das Industriegerät 1 stellt - wie oben zur Fig. 4 detailliert erläutert - ausgangsseitig eine Bestätigungs-Attestierung BA bereit. Die Bestätigungs-Attestierung BA wird über das Netzwerk 23 an das Backend-System 24 übertragen. Das Backend-System 24 ist dazu eingerichtet, die von dem Industriegerät 1 ausgestellte Bestätigungs-Attestierung BA zur Ermittlung der Integrität des Industriegeräts 1 zu prüfen.

Das Backend-System 24 ist beispielsweise ein Cloud-System, ein Edge-Cloud-System oder ein Produktionsüberwachungssystem. Wie das Beispiel des Produktionsüberwachungssystems zeigt, kann das Backend-System 24 auch ein System sein, das sich lokal in einer Fabrik befindet, welches das Industriegerät 1 umfasst.

In Fig. 6 ist ein schematisches Ablaufdiagramm eines Ausführungsbeispiels eines Verfahrens zum Betreiben eines rechnergestützten Industriegerätes 1 dargestellt. Ausführungsbeispiele für das Industriegerät 1 zeigen die Fig. 1 bis 5**.** Das Verfahren nach Fig. 6 umfasst die Schritte S1, S2 und S3:
In Schritt S1 wird zumindest ein Integritäts-Messwert IM mittels einer Integritäts-Messeinheit 2 des Industriegeräts 1 bereitgestellt.

In Schritt S2 wird eine durch einen ersten kryptographischen Schutz DS1 geschützte Integritäts-Attestierung IA zur Angabe einer Integrität des Industriegeräts 1 oder eines Teils des Industriegeräts 1 bereitgestellt. Dabei umfasst die Integritäts-Attestierung IA zumindest den zumindest einen bereitgestellten Integritäts-Messwert IM.

In Schritt S3 wird eine Prüfinformation PI mittels Prüfen zumindest eines Zustands der Bestätigungs-Einheit 5 und/oder des Industriegeräts 1 bereitgestellt und basierend darauf wird eine durch einen zweiten kryptographischen Schutz DS2 geschützte Bestätigungs-Attestierung BA in Abhängigkeit der bereitgestellten Prüfinformation PI bereitgestellt. Dabei umfasst die Bestätigungs-Attestierung BA zumindest die Anzahl der Integritäts-Messwerte IM der Integritäts-Attestierung IA und eine von dem ersten kryptographischen Schutz DS1 der Integritäts-Attestierung IA ableitbare Information.

Obwohl die vorliegende Erfindung anhand von Ausführungsbeispielen beschrieben wurde, ist sie vielfältig modifizierbar.

## Patentansprüche

1. Rechnergestütztes Industriegerät (1), mit:
einer Anzahl von Integritäts-Messeinheiten (2) zum jeweiligen Bereitstellen eines Integritäts-Messwerts (IM),
einer Attestierungs-Einheit (3) zum Bereitstellen einer durch einen ersten kryptographischen Schutz (DS1) geschützten Integritäts-Attestierung (IA) zur Angabe einer Integrität des Industriegeräts (1) oder eines Teils des Industriegeräts (1), wobei die Integritäts-Attestierung (IA) zumindest eine Anzahl von bereitgestellten Integritäts-Messwerten (IM) aufweist, und
einer mit der Attestierungs-Einheit (3) über einen physikalisch geschützten Übertragungsweg (4) verbundenen Bestätigungs-Einheit (5), welche umfasst:
eine Prüf-Einheit (6) zum Bereitstellen einer Prüfinformation (PI) mittels Prüfen zumindest eines Zustands der Bestätigungs-Einheit (5) und/oder des Industriegeräts (1), und
eine Ausstell-Einheit (7) zum Ausstellen einer durch einen zweiten kryptographischen Schutz (DS2) geschützten Bestätigungs-Attestierung (BA) in Abhängigkeit der bereitgestellten Prüfinformation (PI),
**dadurch gekennzeichnet, dass** die Bestätigungs-Attestierung (BA) zumindest die Anzahl der Integritäts-Messwerte (IM) der Integritäts-Attestierung (IA) und eine von dem ersten kryptographischen Schutz (DS1) der Integritäts-Attestierung (IA) ableitbare Information umfasst.

2. Industriegerät nach Anspruch 1,
**dadurch gekennzeichnet,**
**dass** der erste kryptographische Schutz (DS1) als eine erste digitale Signatur (DS1) ausgebildet ist, und/oder
**dass** der zweite kryptographische Schutz (DS2) als eine zweite digitale Signatur (DS2) ausgebildet ist.

3. Industriegerät nach Anspruch 2,
**dadurch gekennzeichnet,**
**dass** die Attestierungs-Einheit (3) dazu eingerichtet ist, die kryptographisch geschützte Integritäts-Attestierung (IA) derart bereitzustellen, dass diese (IA) die Anzahl von Integritäts-Messwerten (IM) und die erste digitale Signatur (DS1) umfasst, und/oder
**dass** die Bestätigungs-Einheit (5) dazu eingerichtet ist, die kryptographisch geschützte Bestätigungs-Attestierung (BA) derart bereitzustellen, dass diese (BA) zumindest die Anzahl der Integritäts-Messwerte (IM) und die erste digitale Signatur (DS1) der Integritäts-Attestierung (IA) sowie die zweite digitale Signatur (DS2) der Bestätigungs-Attestierung (BA) umfasst.

4. Industriegerät nach Anspruch 3,
**dadurch gekennzeichnet,**
**dass** die Bestätigungs-Einheit (5) dazu eingerichtet ist, die kryptographisch geschützte Bestätigungs-Attestierung (BA) derart bereitzustellen, dass diese (BA) die Anzahl der Integritäts-Messwerte (IM) und die erste digitale Signatur (DS1) der Integritäts-Attestierung (IA), die zweite digitale Signatur (DS2) der Bestätigungs-Attestierung (BA) und die Prüfinformation (PI) und/oder eine von der Prüfinformation (PI) ableitbare Information umfasst, welche indikativ für die Bildung der Bestätigungs-Attestierung (BA) in der Bestätigungs-Einheit (5) ist.

5. Industriegerät nach einem der Ansprüche 1 bis 4,
**dadurch gekennzeichnet,**
**dass** die Attestierungs-Einheit (3) eine gegen Zugriff von extern gesicherte erste Speicher-Einheit (9) zum Speichern eines dem ersten kryptographischen Schutz (DS1) zugeordneten ersten kryptographischen Credentials (K1) aufweist, und/oder dass die Bestätigungs-Einheit (5) eine aktualisierbare zweite Speicher-Einheit (14) zum Speichern eines dem zweiten kryptographischen Schutz (DS2) zugeordneten zweiten kryptographischen Credentials (K2) aufweist.

6. Industriegerät nach Anspruch 5,
**dadurch gekennzeichnet,**
**dass** der erste kryptographische Schutz (DS1) als eine erste digitale Signatur (DS1) ausgebildet ist und das erste kryptographische Credential (K1) als ein der ersten digitalen Signatur (DS1) zugeordneter privater Schlüssel (K1) ausgebildet ist, und/oder
**dass** der zweite kryptographische Schutz (DS2) als eine zweite digitale Signatur (DS2) ausgebildet ist und das zweite kryptographische Credential (K2) als ein der zweiten digitalen Signatur (DS2) zugeordneter privater Schlüssel (K2) ausgebildet ist.

7. Industriegerät nach einem der Ansprüche 1 bis 6,
**dadurch gekennzeichnet,**
**dass** die Prüf-Einheit (6) mit einer Anzahl von in dem Industriegerät (1) oder an dem Industriegerät (1) verbauten physikalischen Sensoren (13) zum Bereitstellen von für den Zustand der Bestätigungs-Einheit (5) und/oder des Industriegeräts (1) indikativen Sensorsignalen (SS) verbunden ist.

8. Industriegerät nach einem der Ansprüche 1 bis 7,
**dadurch gekennzeichnet,**
**dass** die Prüf-Einheit (6) zur Bereitstellung der Prüfinformation (PI) dazu eingerichtet ist, einen Firmware-Stand der Bestätigungs-Einheit (5) zu prüfen, ein Ausgangssignal eines Gehäuseschutzschalters des Industriegeräts (1) zu prüfen, ein Ausgangssignal eines Tamperschutzsensors des Industriegeräts (1) zu prüfen, ein Ausgangssignal eines Spannungssensors zur Überwachung einer Spannungsversorgung des Industriegeräts (1) zu prüfen und/oder zu prüfen, ob eine aktuelle von einem in dem oder an dem Industriegerät (1) verbauten Temperatursensor gelieferte Temperatur innerhalb eines vorbestimmten Temperaturbereichs liegt.

9. Industriegerät nach einem der Ansprüche 1 bis 8,
**dadurch gekennzeichnet,**
**dass** die Attestierungs-Einheit (3) als eine Tamper-geschützte Rechenvorrichtung, insbesondere als ein Trusted Platform Module (TPM), ausgebildet ist.

10. Industriegerät nach einem der Ansprüche 1 bis 9,
**dadurch gekennzeichnet,**
**dass** das Industriegerät (1) ein einziges Gehäuse aufweist, in welchem die Attestierungs-Einheit (3), die Bestätigungs-Einheit (5) und der die Attestierungs-Einheit (3) und die Bestätigungs-Einheit (5) verbindende physikalisch geschützte Übertragungsweg (4) angeordnet sind.

11. Industriegerät nach einem der Ansprüche 1 bis 9,
**dadurch gekennzeichnet,**
**dass** das Industriegerät (1) ein Gehäuse aufweist, in dem die Attestierungs-Einheit (3) angeordnet ist, wobei die Bestätigungs-Einheit (5) als ein Ansteckmodul zum Anstecken an einen Bus des Industriegeräts (1) ausgebildet ist.

12. Industriegerät nach einem der Ansprüche 1 bis 9,
**dadurch gekennzeichnet,**
**dass** das Industriegerät (1) ein Einschubgehäuse aufweist, wobei die Bestätigungs-Einheit (5) oder die Bestätigungs-Einheit (5) und die Attestierungs-Einheit (3) als ein jeweiliges Einschubmodul zum Einstecken in das Einschubgehäuse ausgebildet sind.

13. System, mit
einem rechnergestützten Industriegerät (1) nach einem der Ansprüche 1 bis 12, und
einem über ein Netzwerk (23) mit dem Industriegerät (1) gekoppelten Backend-System (24), welches dazu eingerichtet ist, die von dem Industriegerät (1) ausgestellte Bestätigungs-Attestierung (BA) zur Ermittlung der Integrität des Industriegeräts (1) zu prüfen.

14. Computerimplementiertes Verfahren zum Betreiben eines rechnergestützten Industriegeräts (1), mit:
Bereitstellen (S1) eines Integritäts-Messwerts (IM) mittels einer Integritäts-Messeinheit (2) des Industriegeräts (1),
Bereitstellen (S2) einer durch einen ersten kryptographischen Schutz (DS1) geschützten Integritäts-Attestierung (IA) zur Angabe einer Integrität des Industriegeräts (1) oder eines Teils des Industriegeräts (1), wobei die Integritäts-Attestierung (IA) zumindest eine Anzahl von bereitgestellten Integritäts-Messwerten (IM) aufweist, und
Bereitstellen (S3) einer Prüfinformation (PI) mittels Prüfen zumindest eines Zustands der Bestätigungs-Einheit (5) und/oder des Industriegeräts (1) und Ausstellen einer durch einen zweiten kryptographischen Schutz (DS2) geschützten Bestätigungs-Attestierung (BA) in Abhängigkeit der bereitgestellten Prüfinformation (PI),
**dadurch gekennzeichnet, dass** die Bestätigungs-Attestierung (BA) zumindest die Anzahl der Integritäts-Messwerte (IM) der Integritäts-Attestierung (IA) und eine von dem ersten kryptographischen Schutz (DS1) der Integritäts-Attestierung (IA) ableitbare Information umfasst.

15. Computerprogrammprodukt, welches auf einer programmgesteuerten Einrichtung die Durchführung des Verfahrens nach Anspruch 14 veranlasst.

## Claims

1. Computer-aided industrial device (1), comprising:
a number of integrity measuring units (2) for respectively providing an integrity measurement value (IM),
an attestation unit (3) for providing an integrity attestation (IA), which is protected by a first cryptographic protection (DS1), for indicating an integrity of the industrial device (1) or of a part of the industrial device (1), wherein the integrity attestation (IA) has at least a number of provided integrity measurement values (IM), and
a confirmation unit (5) connected to the attestation unit (3) via a physically protected transmission path (4) and comprising: a checking unit (6) for providing checking information (PI) by means of checking at least one state of the confirmation unit (5) and/or of the industrial device (1), and
an issuing unit (7) for issuing a confirmation attestation (BA), which is protected by a second cryptographic protection (DS2), depending on the provided checking information (PI),
**characterized in that** the confirmation attestation (BA) comprises at least the number of integrity measurement values (IM) of the integrity attestation (IA) and information derivable from the first cryptographic protection (DS1) of the integrity attestation (IA).

2. Industrial device according to Claim 1,
**characterized**
**in that** the first cryptographic protection (DS1) is embodied as a first digital signature (DS1), and/or
**in that** the second cryptographic protection (DS2) is embodied as a second digital signature (DS2).

3. Industrial device according to Claim 2,
**characterized**
**in that** the attestation unit (3) is configured to provide the cryptographically protected integrity attestation (IA) in such a way that the latter (IA) comprises the number of integrity measurement values (IM) and the first digital signature (DS1), and/or
**in that** the confirmation unit (5) is configured to provide the cryptographically protected confirmation attestation (BA) in such a way that the latter (BA) comprises at least the number of integrity measurement values (IM) and the first digital signature (DS1) of the integrity attestation (IA) and also the second digital signature (DS2) of the confirmation attestation (BA).

4. Industrial device according to Claim 3,
**characterized**
**in that** the confirmation unit (5) is configured to provide the cryptographically protected confirmation attestation (BA) in such a way that the latter (BA) comprises the number of integrity measurement values (IM) and the first digital signature (DS1) of the integrity attestation (IA), the second digital signature (DS2) of the confirmation attestation (BA) and the checking information (PI) and/or information which is derivable from the checking information (PI) and which is indicative of the formation of the confirmation attestation (BA) in the confirmation unit (5).

5. Industrial device according to any of Claims 1 to 4, **characterized**
**in that** the attestation unit (3) has a first storage unit (9), secured against external access, for storing a first cryptographic credential (K1) assigned to the first cryptographic protection (DS1), and/or
**in that** the confirmation unit (5) has an updatable second storage unit (14) for storing a second cryptographic credential (K2) assigned to the second cryptographic protection (DS2).

6. Industrial device according to Claim 5,
**characterized**
**in that** the first cryptographic protection (DS1) is embodied as a first digital signature (DS1) and the first cryptographic credential (K1) is embodied as a private key (K1) assigned to the first digital signature (DS1), and/or
**in that** the second cryptographic protection (DS2) is embodied as a second digital signature (DS2) and the second cryptographic credential (K2) is embodied as a private key (K2) assigned to the second digital signature (DS2).

7. Industrial device according to any of Claims 1 to 6, **characterized**
**in that** the checking unit (6) is connected to a number of physical sensors (13) installed in the industrial device (1) or on the industrial device (1) and serving for providing sensor signals (SS) indicative of the state of the confirmation unit (5) and/or of the industrial device (1).

8. Industrial device according to any of Claims 1 to 7, **characterized**
**in that** the checking unit (6) for providing the checking information (PI) is configured to check a firmware status of the confirmation unit (5), to check an output signal of a housing circuit breaker of the industrial device (1), to check an output signal of a tamper protection sensor of the industrial device (1), to check an output signal of a voltage sensor for monitoring a voltage supply of the industrial device (1) and/or to check whether a present temperature yielded by a temperature sensor installed in or on the industrial device (1) lies within a predetermined temperature range.

9. Industrial device according to any of Claims 1 to 8, **characterized**
**in that** the attestation unit (3) is embodied as a tamperproof computing apparatus, in particular as a trusted platform module (TPM).

10. Industrial device according to any of Claims 1 to 9, **characterized**
**in that** the industrial device (1) has a single housing, in which the attestation unit (3), the confirmation unit (5) and the physically protected transmission path (4) connecting the attestation unit (3) and the confirmation unit (5) are arranged.

11. Industrial device according to any of Claims 1 to 9, **characterized**
**in that** the industrial device (1) has a housing with the attestation unit (3) arranged therein, the confirmation unit (5) being embodied as an attachment module for attachment to a bus of the industrial device (1).

12. Industrial device according to any of Claims 1 to 9, **characterized**
**in that** the industrial device (1) has a slide-in housing, the confirmation unit (5) or the confirmation unit (5) and the attestation unit (3) being embodied as a respective slide-in module for insertion into the slide-in housing.

13. System, comprising
a computer-aided industrial device (1) according to any of Claims 1 to 12, and
a backend system (24) coupled to the industrial device (1) via a network (23) and configured to check the confirmation attestation (BA) issued by the industrial device (1) in order to ascertain the integrity of the industrial device (1).

14. Computer-implemented method for operating a computer-aided industrial device (1), comprising:
providing (S1) an integrity measurement value (IM) by means of an integrity measuring unit (2) of the industrial device (1),
providing (S2) an integrity attestation (IA), which is protected by a first cryptographic protection (DS1), for indicating an integrity of the industrial device (1) or of a part of the industrial device (1), wherein the integrity attestation (IA) has at least a number of provided integrity measurement values (IM), and
providing (S3) checking information (PI) by means of checking at least one state of the confirmation unit (5) and/or of the industrial device (1), and issuing a confirmation attestation (BA), which is protected by a second cryptographic protection (DS2), depending on the provided checking information (PI),
**characterized in that** the confirmation attestation (BA) comprises at least the number of integrity measurement values (IM) of the integrity attestation (IA) and information derivable from the first cryptographic protection (DS1) of the integrity attestation (IA).

15. Computer program product which causes the method according to Claim 14 to be carried out on a program-controlled device.

## Revendications

1. Appareil industriel assisté par ordinateur (1), comprenant :
un nombre d'unités de mesure d'intégrité (2) destinées à fournir respectivement une valeur de mesure d'intégrité (IM),
une unité d'attestation (3) destinée à fournir une attestation d'intégrité (IA) protégée par une première protection cryptographique (DS1) afin d'indiquer une intégrité de l'appareil industriel (1) ou d'une partie de l'appareil industriel (1), dans lequel l'attestation d'intégrité (IA) comprend au moins un nombre de valeurs de mesure d'intégrité (IM) fournies, et
une unité de confirmation (5) reliée à l'unité d'attestation (3) par un canal de transmission physiquement protégé (4), qui comprend :
une unité de contrôle (6) destinée à fournir des informations de contrôle (PI) au moyen d'un contrôle d'au moins un état de l'unité de confirmation (5) et/ou de l'appareil industriel (1), et
une unité d'émission (7) pour l'émission d'une attestation de confirmation (BA) protégée par une deuxième protection cryptographique (DS2) en fonction des informations de contrôle (PI) fournies,
**caractérisé en ce que** l'attestation de confirmation (BA) comporte au moins le nombre de valeurs de mesure d'intégrité (IM) de l'attestation d'intégrité (IA) et une information pouvant être déduite de la première protection cryptographique (DS1) de l'attestation d'intégrité (IA).

2. Appareil industriel selon la revendication 1,
**caractérisé en ce que**
la première protection cryptographique (DS1) est conçue comme une première signature numérique (DS1), et/ou
la deuxième protection cryptographique (DS2) est conçue comme une deuxième signature numérique (DS2).

3. Appareil industriel selon la revendication 2,
**caractérisé en ce que**
l'unité d'attestation (3) est conçue pour fournir l'attestation d'intégrité (IA) protégée par cryptographie de telle sorte que ladite attestation (IA) comprend le nombre de valeurs de mesure d'intégrité (IM) et la première signature numérique (DS1), et/ou l'unité de confirmation (5) est conçue pour fournir l'attestation de confirmation (BA) protégée par cryptographie, de telle sorte que ladite attestation (BA) comprend au moins le nombre de valeurs de mesure d'intégrité (IM) et la première signature numérique (DS1) de l'attestation d'intégrité (IA) ainsi que la deuxième signature numérique (DS2) de l'attestation de confirmation (BA).

4. Appareil industriel selon la revendication 3,
**caractérisé en ce que**
l'unité de confirmation (5) est conçue pour fournir l'attestation de confirmation (BA) protégée par cryptographie, de telle sorte que ladite attestation (BA) comprend le nombre de valeurs de mesure d'intégrité (IM) et la première signature numérique (DS1) de l'attestation d'intégrité (IA), la deuxième signature numérique (DS2) de l'attestation de confirmation (BA) et les informations de contrôle (PI) et/ou une information pouvant être dérivée des informations de contrôle (PI), qui indique la création de l'attestation de confirmation (BA) dans l'unité de confirmation (5).

5. Appareil industriel selon l'une des revendications 1 à 4, **caractérisé en ce que**
l'unité d'attestation (3) comporte une première unité de mémoire (9) protégée contre un accès externe pour stocker un premier certificat cryptographique (K1) associé à la première protection cryptographique (DS1), et/ou
l'unité de confirmation (5) comporte une deuxième unité de mémoire (14) pouvant être actualisée pour stocker un deuxième certificat cryptographique (K2) associé à la deuxième protection cryptographique (DS2).

6. Appareil industriel selon la revendication 5,
**caractérisé en ce que**
la première protection cryptographique (DS1) est conçue comme une première signature numérique (DS1) et le premier certificat cryptographique (K1) est conçu comme une clé privée (K1) attribuée à la première signature numérique (DS1), et/ou la deuxième protection cryptographique (DS2) est conçue comme une deuxième signature numérique (DS2) et le deuxième certificat cryptographique (K2) est conçu comme une clé privée (K2) attribuée à la deuxième signature numérique (DS2).

7. Appareil industriel selon l'une des revendications 1 à 6, **caractérisé en ce que**
l'unité de contrôle (6) est reliée à un nombre de capteurs physiques (13) installés dans l'appareil industriel (1) ou sur l'appareil industriel (1) afin de fournir des signaux de capteur (SS) indicatifs de l'état de l'unité de confirmation (5) et/ou de l'appareil industriel (1).

8. Appareil industriel selon l'une des revendications 1 à 7, **caractérisé en ce que**
l'unité de contrôle (6) destinée à fournir les informations de contrôle (PI) est conçue pour contrôler un état du micrologiciel de l'unité de confirmation (5), contrôler un signal de sortie d'un disjoncteur de protection du boîtier de l'appareil industriel (1), contrôler un signal de sortie d'un capteur de protection contre les manipulations de l'appareil industriel (1), contrôler un signal de sortie d'un capteur de tension pour surveiller une alimentation en tension de l'appareil industriel (1) et/ou contrôler si une température actuelle fournie par un capteur de température installé dans ou sur l'appareil industriel (1) se situe dans une plage de températures prédéfinie.

9. Appareil industriel selon l'une des revendications 1 à 8, **caractérisé en ce que**
l'unité d'attestation (3) est conçue comme un dispositif de calcul protégé contre les manipulations, en particulier comme un module de plateforme fiable (TPM).

10. Appareil industriel selon l'une des revendications 1 à 9, **caractérisé en ce que**
l'appareil industriel (1) comporte un boîtier unique dans lequel sont disposées l'unité d'attestation (3), l'unité de confirmation (5) et le canal de transmission physiquement protégé (4) reliant l'unité d'attestation (3) et l'unité de confirmation (5).

11. Appareil industriel selon l'une des revendications 1 à 9, **caractérisé en ce que**
l'appareil industriel (1) comporte un boîtier dans lequel est disposée l'unité d'attestation (3), dans lequel l'unité de confirmation (5) est conçue comme un module enfichable destiné à être enfiché sur un bus de l'appareil industriel (1).

12. Appareil industriel selon l'une des revendications 1 à 9, **caractérisé en ce que**
l'appareil industriel (1) comporte un boîtier enfichable, dans lequel l'unité de confirmation (5) ou l'unité de confirmation (5) et l'unité d'attestation (3) sont conçues comme un module enfichable respectif destiné à être enfiché dans le boîtier enfichable.

13. Système, comprenant
un appareil industriel assisté par ordinateur (1) selon l'une des revendications 1 à 12, et
un système d'arrière-plan (24) couplé à l'appareil industriel (1) par l'intermédiaire d'un réseau (23), qui est conçu pour contrôler l'attestation de confirmation (BA) émise par l'appareil industriel (1) afin de déterminer l'intégrité de l'appareil industriel (1).

14. Procédé mis en œuvre par ordinateur pour le fonctionnement d'un appareil industriel assisté par ordinateur (1), comprenant :
la fourniture (S1) d'une valeur de mesure d'intégrité (IM) à l'aide d'une unité de mesure d'intégrité (2) de l'appareil industriel (1),
la fourniture (S2) d'une attestation d'intégrité (IA) protégée par une première protection cryptographique (DS1) pour indiquer une intégrité de l'appareil industriel (1) ou d'une partie de l'appareil industriel (1), dans lequel l'attestation d'intégrité (IA) comprend au moins un nombre de valeurs de mesure d'intégrité (IM) fournies, et
la fourniture (S3) d'une information de contrôle (PI) à l'aide d'un contrôle d'au moins un état de l'unité de confirmation (5) et/ou de l'appareil industriel (1) et l'émission d'une attestation de confirmation (BA) protégée par une deuxième protection cryptographique (DS2) en fonction de l'information de contrôle fournie (PI),
**caractérisé en ce que** l'attestation de confirmation (BA) comprend au moins le nombre de valeurs de mesure d'intégrité (IM) de l'attestation d'intégrité (IA) et une information pouvant être déduite de la première protection cryptographique (DS1) de l'attestation d'intégrité (IA).

15. Produit de programme informatique, qui déclenche l'exécution du procédé selon la revendication 14 sur un dispositif commandé par programme.
